# EUROPÄISCHE PATENTANMELDUNG

(11) **EP 0 744 352 A1**
(43) Veröffentlichungstag der Anmeldung: **27.11.1996**
(21) Anmeldenummer: 96107725.2
(22) Anmeldetag: 15.05.1996
(51) Int. Cl.: B65D 71/00

(54) **Mehrwegpackung mit Originalitätssicherung**

(30) Priorität: 22.05.1995 DE 29508478 U
(71) Anmelder: HOECHST AKTIENGESELLSCHAFT, 65929 Frankfurt am Main (DE)
(72) Erfinder: Ziegert, Günter, 65929 Frankfurt (DE)

(57) **Zusammenfassung**

Die Erfindung betrifft eine Verpackung (2,3), insbesondere für Faltschachteln oder Tuben (1), im wesentlichen bestehend aus einer Schachtel (2), dadurch gekennzeichnet, daß die Schachtel (2) eine hydrophobe Mehrwegversandschachtel ist und in eine Schrumpffolie (3) eingeschrumpft ist.

Die Vorteile der erfindungsgemäßen Verpackung sind im wesentlichen darin zu sehen, daß die Menge an Verpackungsmaterial reduziert wird, daß eine schnelle Konfektionierung der Mehrwegversandschachtel (2) aufgrund des Klapp- oder Steckbodens möglich ist, daß infolge der Schrumpffolie (3) Originalitätsschutz gegeben ist und daß die Eigenfeuchte des Verpackungsgutes konserviert wird. Außerdem kann das Verpackungsgut keim- und partikelarm gehalten werden.

## Beschreibung

Die Erfindung betrifft eine Verpackung, insbesondere für Faltschachteln oder Tuben, im wesentlichen bestehend aus einer Schachtel.

Verpackungen der genannten Art sind bekannt und werden beispielsweise in der Form von Wellpappschachteln im pharmazeutischen Bereich zur Verpackung von diversen Füllgütern wie zum Beispiel Tuben oder Faltschachteln für Tabletten eingesetzt.
Solche Verpackungen haben unter anderem die Nachteile, daß ein Originalitätsschutz für das Verpackungsgut nicht gegeben ist, daß sie nur einmal verwendet werden können und daß sie dem Verpackungsgut Feuchtigkeit entziehen, was die Qualität desselben vermindern kann. So können Faltschachteln für Tabletten, wenn sie in diesen Verpackungen gelagert wurden und ihre Feuchtigkeit ganz oder zum größten Teil eingebüßt haben, aufgrund der veränderten Knickeigenschaften maschinell nicht mehr so verarbeitet werden wie sonst.

Hier will die Erfindung Abhilfe schaffen.

Erfindungsgemäß geschieht dies dadurch, daß die Schachtel eine hydrophobe Mehrwegversandschachtel ist und in eine Schrumpffolie eingeschrumpft ist.

Gegenstand der Erfindung ist somit eine Verpackung, insbesondere für Faltschachteln oder Tuben, im wesentlichen bestehend aus einer Schachtel, dadurch gekennzeichnet, daß die Schachtel eine hydrophobe Mehrwegversandschachtel ist und in eine Schrumpffolie eingeschrumpft ist. Weitere Ausführungsformen ergeben sich aus den Ansprüchen 2 bis 6.

Es können auch einzelne oder mehrere der in den Ansprüchen beschriebenen Einzelmerkmale jeweils für sich eigenständige erfindungsgemäße Lösungen bilden und es sind auch die Merkmale der Ausführungsformen beliebig kombinierbar.

Die Vorteile der erfindungsgemäßen Verpackung sind im wesentlichen darin zu sehen, daß die Menge an Verpackungsmaterial reduziert wird, daß eine schnelle Konfektionierung der Mehrwegversandschachtel aufgrund des Klapp- oder Steckbodens möglich ist, daß infolge der Schrumpffolie Originalitätsschutz gegeben ist und daß die Eigenfeuchte des Verpackungsgutes konserviert wird. Außerdem kann das Verpackungsgut keim- und partikelarm gehalten werden.

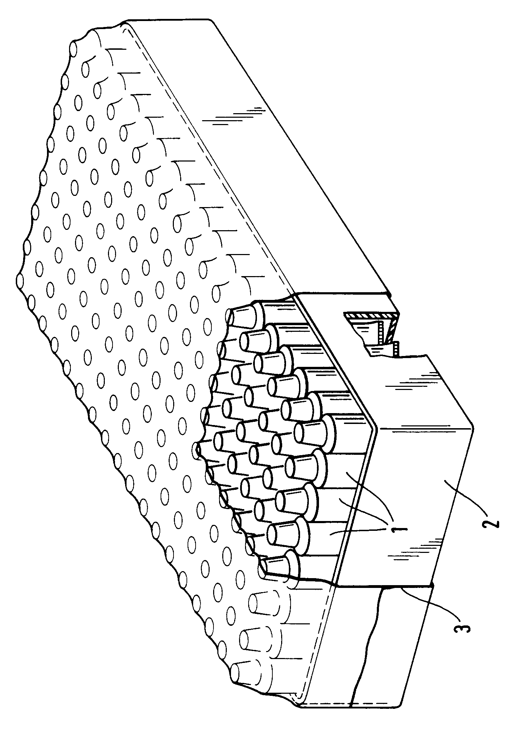

Eine mögliche Ausführungsform der Erfindung ist in der einzigen Zeichnung dargestellt, in der zu sehen ist, wie ein Gebinde von Tuben 1 in einer Mehrwegversandschachtel 2 mit einer Schrumpffolie 3 eingeschrumpft ist.

Daß die erfindungsgemäße Verpackung auch für andere Verpackungsgüter als angegeben geeignet ist, versteht sich von selbst.

## Patentansprüche

1. Verpackung, insbesondere für Faltschachteln oder Tuben, im wesentlichen bestehend aus einer Schachtel, dadurch gekennzeichnet, daß die Schachtel eine hydrophobe Mehrwegversandschachtel ist und in eine Schrumpffolie eingeschrumpft ist.

2. Verpackung nach Anspruch 1, dadurch gekennzeichnet, daß die hydrophobe Mehrwegversandschachtel aus einem Kunststoff gefertigt ist.

3. Verpackung nach Anspruch 1, dadurch gekennzeichnet, daß die Mehrwegversandschachtel einen Klapp- oder einen Steckboden aufweist.

4. Verpackung nach Anspruch 2, dadurch gekennzeichnet, daß der Kunststoff Polyethylen und/oder Polypropylen enthält.

5. Verpackung nach Anspruch 1, dadurch gekennzeichnet, daß die Schrumpffolie Polypropylen und /oder Polyethylen enthält.

6. Verpackung nach Anspruch 1, dadurch gekennzeichnet, daß die Schrumpffolie keim- und partikelarm ist.
